# EUROPEAN PATENT SPECIFICATION

(11) **EP 3 740 998 B1**
(45) Date of publication and mention of the grant of the patent: **13.08.2025**
(21) Application number: 19702186.8
(22) Date of filing: 14.01.2019
(51) Int. Cl.: H01M 10/6557, H01M 10/653, H01M 10/647, H01M 10/6555, H01M 10/613, H01M 50/211

(54) **ENERGY STORAGE SYSTEM**
ENERGIESPEICHERSYSTEM
SYSTÈME DE STOCKAGE D'ÉNERGIE

(30) Priority: 17.01.2018 GB 201800758
(43) Date of publication of application: 25.11.2020
(73) Proprietor: Siemens Energy AS, 0596 Oslo (NO)
(72) Inventor: BØRSHEIM, Eirik, 0485 Oslo (NO); BERGE, Tore, 7020 Trondheim (NO); SKJETNE, Arve, 7032 Trondheim (NO)
(74) Representative: Roth, Thomas
(86) International application number: PCT/EP2019/050740
(87) International publication number: WO 2019/141609

(56) References cited:
- WO-A2-2010/053689
- US-A1- 2010 104 927
- US-A1- 2016 233 564

## Description

This invention relates to an energy storage system, in particular for energy storage modules comprising an electrochemical cell, or battery, providing electrical energy to an end user.

Stored electrical energy modules, or power units of various types are becoming increasingly common in many applications, in particular for use where there are environmental concerns relating to emissions in sensitive environments, or public health concerns. Stored electrical energy power units are typically used to provide electrical energy to operate equipment, to avoid emissions at the point of use, although that stored energy may have been generated in many different ways. Stored electrical energy may also be used to provide peak shaving in systems otherwise supplied from the grid, or from various types of power generation system, including diesel generators, gas turbines, or renewable energy sources. Aircraft, vehicles, vessels, offshore rigs, or rigs and other powered equipment in remote locations are examples of users of large scale stored electrical energy. Vehicle drivers may use the stored energy power unit in city centres and charge from an internal combustion engine on trunk roads, to reduce the harmful emissions in the towns and cities, or they may charge up from an electricity supply. Ferries which carry out most of their voyage relatively close to inhabited areas, or in sensitive environments are being designed with hybrid, or fully electric drive systems. Ferries may operate with stored energy to power the vessel when close to shore, using diesel generators offshore to recharge the batteries. In some countries the availability of electricity from renewable energy sources to use to charge the stored energy unit means that a fully electric vessel may be used, provided that the stored energy units are sufficiently reliable for the distances being covered, with no diesel, or other non-renewable energy source used at all. Whether hybrid, or fully electric, the stored energy units may be charged from a shore supply when docked. The development of technology to achieve stored energy units that are reliable enough for prolonged use as the primary power source must address certain technical issues.

The document WO2010053689 discloses an energy storage system comprising energy storage modules.

In accordance with a first aspect of the present invention, an energy storage system comprises at least one energy storage module, each module comprising a plurality of energy storage devices; each energy storage device comprising at least one electrically conducting cell tab electrically connected to electrodes of the energy storage device, one end of the cell tab protruding from the energy storage device; wherein the energy storage module further comprises a cooler for each energy storage device, the cooler comprising a one or more enclosed cooling channels in contact with one surface of the energy storage device; wherein the cooling channels of the cooler comprise an electrically non-conducting material; and wherein the cooler further comprises a section of the cooling channels thermally coupled to the protruding end of the cell tab, wherein the channel walls further form a raised section at end end of the cooler to connect the cell tab to.

Use of an electrically non-conducting material for the cooler avoids short circuit or leakage current issues between the cooler walls and the cell tab, as well as being easier to manufacture in the required shape for the energy storage device.

Preferably, the cooler comprises one or more cooling fluid channels between a fluid inlet and a fluid outlet forming a serpentine flow path, or multiple parallel flow paths.

Preferably, the cooler comprises a material having a thermal conductivity of between 0.2 W/mK and 50 W/mK, although typically the material is chosen to have a thermal conductivity of between 3 W/mK and 5 W/mK.

Preferably, the material comprises one of polyamide or thermoplastic.

The material may be formed into channels to give the required cooler shape more easily than forming metal channels.

The channel walls further form a raised section at an end of the cooler to connect the cell tab to.

This allows the cell tab to be easily fitted to the wall of the coolant flow channels.

Preferably, the energy storage device comprises two cell tabs.

This allows the cell tab to be thermally coupled to a cooler on either side of the battery cell body, whether both to the same cooler on one side, or one cell tab to the cooler on one side and one cell tab to the cooler on the other side, increasing the cooling effect within each energy storage device.

Preferably, the cell tabs comprise one of aluminium, or nickel plated copper.

Preferably, the cooling fluid comprises water

Preferably, the cooling fluid further comprises at least one of a corrosion inhibiting additive, an anti-freeze additive; and a biogrowth inhibiting additive.

An example of a system according to the present invention will now be described with reference to the accompany drawings in which:
Figure 1 illustrates an example of an energy storage system in which the present invention may be applied.
Figure 2 illustrates an example of energy storage devices within an energy storage module in accordance with the present invention;
Figure 3 illustrates a first example of cooling energy storage devices in an energy storage system in accordance with the present invention;
Figure 4 illustrates a second example of cooling energy storage devices in an energy storage system in accordance with the present invention; and,
Figure 5 is a flow diagram illustrating an example of a method for an energy storage system according to the present invention.

Energy storage systems for supplying DC electrical energy for marine applications, such as systems onboard vessels and offshore platforms, have high voltage and current requirements. They may need to provide voltage levels of 1KV DC, or higher, which are achieved by combining multiple energy storage modules operating at voltages between 50V DC and 200V DC, typically around 100V DC. In the examples shown, the energy storage module cooling systems are fluidly connected in parallel and the energy storage modules are electrically connected together in series. Alternatively, the cooling systems may be connected together in series. Each module may comprise a plurality of energy storage devices, such as battery cells, connected together in series to provide the required total module voltage. Typically, this is of the order of 100V to 150V DC, using energy storage devices each rated at between 3V and 12V. For example, each battery cell may only have a voltage of the order of 3V, but in a module having twenty eight cells, electrically connected together in series, this results in a voltage closer to 100V. Multiple modules may be coupled together to be able to provide sufficient DC voltage to power systems on the vessel, for example, 1KV or more.

Early large scale batteries were lead acid, but more recently, lithium ion batteries have been developed for electrical energy storage for large scale applications. Li-ion batteries are typically pressurised and the electrolyte is flammable, so they require care in use and storage. A problem which may occur with Li-ion batteries is thermal runaway which may be caused by an internal short circuit in a battery cell, created during manufacture. Other causes, such as mechanical damage, overcharge, or uncontrolled current may also cause thermal runaway, but the battery system design is typically adapted to avoid these. Manufacturing issues with the cells cannot be ruled out entirely, so precautions are required to minimise the effect should thermal runaway occur. In a large-scale Li-ion battery system, the amount of energy that is released during a thermal runaway is a challenge to contain. A thermal event may increase temperatures in a single cell from a standard operating temperature in the range of 20°C to 26 °C to as much as 700°C to 1000°C. Safe operating temperatures are below 60 °C, so this is a significant problem.

There are strict regulations in the marine and offshore industries regarding risk to the vessel or rig, one requirement being that there should be no transfer of excess temperature from one cell to another. If overheating occurs, then it should be contained in a single cell and not allowed to spread. In addition, for marine and offshore applications, weight and volume of any equipment is severely restricted, leading to compact, lightweight systems being preferred. It is a challenge to produce a compact, lightweight, system that achieves the required thermal isolation and cools the cell in which excess heating occurs, quickly and efficiently.

In a Li-ion battery system, it is very important that the temperature of the battery cells does not exceed the prescribed operating temperature and that the cell temperature in the entire system is uniform. Sustained operation outside the prescribed operating temperature window may severely affect the lifetime of the battery cells and increases the risk of thermal runaway occurring.

For marine applications, there is a particular focus on using energy storage modules, such as batteries, at their maximum charge or discharge rate due to cost of installation and the weight and space taken up by the modules when on a vessel or offshore platform. Furthermore, maintenance and repair, or replacement is complicated and expensive compared to land based uses of stored energy systems, so extending the lifespan of stored energy modules is particularly important. For the example of Li- ion batteries, these are sensitive to high temperature, so it is important to ensure that the operating and ambient temperature are controlled for all cells of a Li-ion battery system to ensure the design lifetime is met. Local variations or hot spots on a single cell may also compromise the total lifetime achievable.

A common approach for large scale, marine, or offshore, stored energy systems is to use air cooling, with air flowing between cells of a battery system. Another option is to use water cooling in combination with aluminium cooling fins. The water cooling is by flowing over heat exchangers and cooler blocks and the aluminium cooling fins are provided between each cell of the battery system. However, this system is not particularly efficient at removing heat and also adds substantial weight to the energy storage system. Aluminium is chosen for its thermal conductivity and relatively low cost, rather than its lightness. Heat from the batteries must pass to the aluminium cooling fins and those fins are then cooled by the liquid which loses its heat at the heat exchanger and is recirculated.

As mentioned above, Li-ion battery cells are very temperature dependant in terms of achieving a long lifespan in industrial applications. In more than 90% of the market applications, lifespan is a significant factor in determining the size of the battery system. If battery life can be prolonged, the investment cost and footprint can be decreased. Li-ion battery manufacturers continue to increase the cell size and the specific energy density in the battery cells, so cells are becoming larger and thicker. Both size and thickness make these battery cells harder to cool evenly over the complete volume, but thickness in particular. Local hotspots formed inside the cell degrade the capacity of the cell, thereby decreasing its life. Typically, the cells are only cooled on one side as the mechanical design has to account for the natural swelling of the cell. This causes the cell to experience a rather drastic delta temperature over the cell body, which may be as much as 5°C to 10°C at end of life. This in turn accelerates ageing.

Some suppliers use expensive materials and complicated mechanical solutions to achieve some cooling on the "opposite side" of the cooled battery cell. Others apply flexible materials with decent thermal properties, but these materials are rare and expensive. Some industrial systems may have open air cooling, thereby lacking skipping the external pressure on the cell wall. The design does not allow for mechanical pressure, as the air flows directly in contact with the cell. Some air-cooled systems cool with fins, which allows some pressure to be maintained. The lack of pressure on the cell wall may have a negative effect on cell life, but allows for significant reductions in design costs. Although an air-cooled system may be adapted to cool the tabs, provided that air is transferred directly to the cell body and tab, this is not applicable for marine applications as the safety requirements do not allow completely open systems that depend on external extinguishing to put out a thermal runaway.

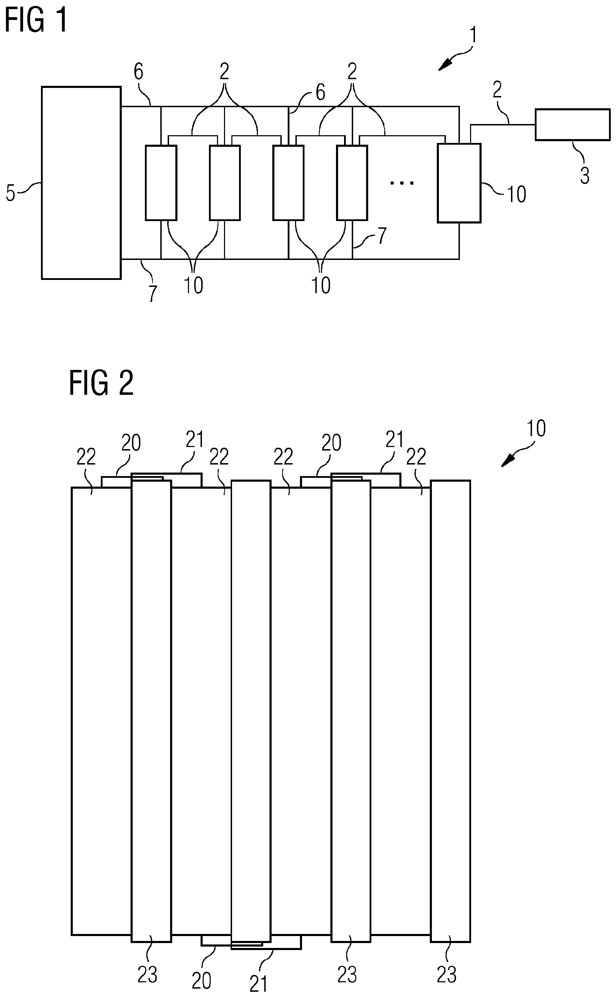

An example of an energy storage system in which the present invention may be applied is illustrated in Fig.1. The system 1 comprises a plurality of energy storage modules 10 electrically connected together in series by buses 2 and controlled by a central controller 3. Each of the energy storage modules is cooled by cooling fluid, circulating from cooling system 5 through inlet pipes 6 and outlet pipes 7. The cooling fluid is typically water which is inexpensive and easier to source and dispose of than synthetic coolants. Additives may be provided, for example to inhibit freezing, biogrowth, or corrosion. Typically, the proportion of additive is determined by the additive chosen, for example 20% frost inhibitor.

Figure 2 illustrates an example of a directly cooled battery cooler setup with welded tab connections on top of a cell cooler. Each energy storage module 10 comprises a plurality of energy storage devices, for example battery cells, electrically connected together in series. On one side of each battery cell body 23 is provided a battery cell cooler 22 which receives cooling fluid from the cooling system 5 via the inlet pipes 6 and outlet pipes 7 to cool the battery cell body. The battery bodies and cell coolers alternate through the module, so that most battery bodies 23 have a cooler on both sides. Cooling is provided on both sides of the cell, as there is no need for additional thermal insulation between the cells, which is common in conventional battery systems. Typically, one side of the cell is provided with a flexible material to allow for natural swelling of the cell, so cooling on the side with the flexible material is less effective. The flexible material ensures that the correct pressure is maintained over time as the cell swells. Each battery cell body 23 has at least one battery tab, but a body 23 may have two battery tabs 20, 21 each of which are thermally coupled to a cell cooler 22 on one side or the other side of the battery cell body, to increase the cooling effect within each battery. The cell cooler comprises tubing for the cooling fluid to flow through, which is an electrically non-conducting material, typically a synthetic material, such as polymer plastics, for example polythene, polyamide, such as PA66 plastics, or thermoplastics such as TCE2, TCE5, or other suitable materials, which may be moulded or extruded to the required shape and is able to withstand normal operating temperatures of the energy storage modules. The shape so formed may be chosen to avoid sharp edges to reduce the chance of harm to an operator when handling the modules. The electrically insulating nature of the coolers which form the module also help to protect the operator. The cell is cooled directly by flowing cooling fluid on a substantial part of the cell surface, with very little thermal resistance. The low conductivity of the material from which the cooling fluid tubing is made assists in preventing heat spreading inside the module in the event of thermal runaway in a cell.

For lithium ion pouch cells, the battery tabs 20, 21 are typically metallic tabs with a substantial surface area which have a direct metallic connection providing good thermal contact to the electrodes and current collectors (not shown) distributed inside the battery cell 23. For example, in a battery cell of thickness 16 mm, there are typically between 40 and 100 single electrodes distributed evenly inside the cell. By cooling the battery cell tab 20, 21 using the cooler 22 of the energy storage device, then hotspots in the battery may be cooled effectively. The good thermal connection to the distributed layers inside the cell makes it possible to cool the hottest areas of the cell directly. As well as cooling the battery hotpots effectively, another benefit of cooling the battery cell tabs 20, 21 is that the electrical resistance in the current collectors and the cell tabs decreases, due to the temperature being kept down. Typically, the energy storage devices are kept cooled to about 25°C in normal operation.

In an energy storage system according to the present invention, there is at least one energy storage module 10, although more usually, there are several, for example, up to 10 energy storage modules electrically coupled together in series to provide up to 100V DC in an energy storage cubicle. Multiple cubicles may be operated together to provide a DC supply voltage of 1KV or higher. Each module 10 comprises a plurality of energy storage devices 23 which may operate typically at between 3V and 12V. Each energy storage device comprises at least one electrically conducting cell tab 20, 21 electrically connected to electrodes of the energy storage device. One end of the cell tab 20, 21 protrudes from the energy storage device 23 to allow the devices to be electrically connected together. The energy storage module 10 further comprises a cooler 22 for each energy storage device, the cooler comprising a plurality of enclosed cooling tubes, or channels, the walls of which are in thermal contact with one surface of the energy storage device. The cooler further comprises a section of the cooling channels thermally coupled to the protruding end of the cell tab.

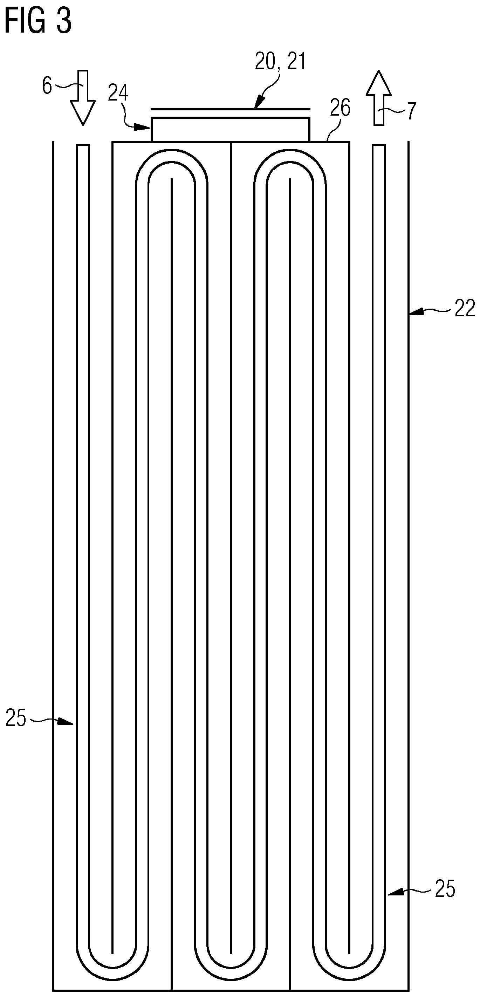

Figure 3 illustrates an example of a typical directly cooled lithium battery system with welded connections. Cell tabs may be welded, pressed, or riveted to each other, or otherwise connected in any suitable manner. Cooling fluid enters the cooling channels 25 and flows from the inlet 6 to the outlet 7 taking heat from the surface of the battery cell body 23 (omitted for clarity), as well as taking heat from the welded cell tab connection 20, 21. By applying liquid cooling with cell coolers between all the cells, so that there is heat transfer through the thermally conducting wall of the cell body to the cooling fluid in the cooler fluid channels, the cell body may be cooled effectively. If the cell coolers were made of an electrically conducting material as has been done conventionally, such as with cooling fins and heat exchangers, then the electrically insulating material required when the cell wall is made of a metal limits the effectiveness of the thermal transfer and cooling applied to the tabs. In the present invention, the cooler fluid channels are themselves electrically insulating, so no additional material is required, providing further savings in weight and cost in addition to those that the use of a light, easily formable material brings.

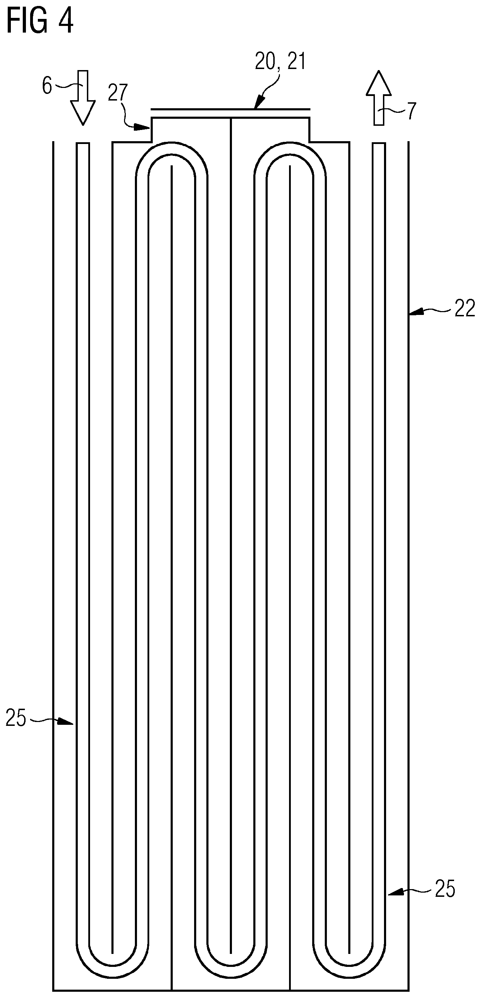

The present invention addresses this problem by using a material for the body of the cooler 22 which is not electrically conductive. Figure 4 illustrates using thermally conductive thermoplastics that are also electrically non-conductive to cool the tab. Instead of that flat upper wall 26 of Fig.3, to which the cell tab 20, 21 is mounted via the electrical isolator 24, the example of Fig.4 uses a thermally conducting cooler material 27 that is shaped to allow the flow of cooling fluid into better contact with the welded cell tab connection 20, 21. By making the cooler from an electrically insulating material, for example polymers, such as polyamides, or thermoplastics without additives, the cooling channels may simply be adapted in form so that they come into contact with the tab material, as well as the side of the battery cell body, to cool the cell tab. The cooling fluid channels or tubing have a typical overall thickness in the range of 5mm to 20mm, with a wall thickness in the range of 1mm to 5mm and preferably, no more than 3mm for a polymer plastics material. The channels may have a square, circular or other suitable cross section.

Effective direct heat transfer from the cell to the cooling fluid is made possible by constructing the cooling channels from tubes having a sufficiently thin wall that thermal conductivity of the material is not a significant consideration. The electrically non-conducting, but thermally conducting, thermoplastics used for the cooler 22 mean that the tab can effectively be cooled by the same cooling loop that cools the battery cell body. Tab cooling in combination with an electrically non-conducting cooler material allows for a wide choice of material, as the material need only have a thermal conductivity of greater than 0.2W/mK. Suitable materials may have a thermal conductivity in the range is 3 W/mK to 5 W/mK, but materials with thermal conductivity between 0.2 W/mK and 50 W/mK give a wide choice. This may permit optimisation of the mechanical qualities and price of the material used, so that savings can be achieved in high volume systems. By contrast, cooling methods that require metals, or other extremely good thermal conductors, with a thermal conductivity of greater than 100 W/mK, lead to a relatively limited choice of material. Furthermore, there are cost savings due to the improved lifetime, if the battery cells are cooled more effectively. Another advantage of using an electrically non-conducting material is that there is no volume by which electromagnetic noise can be transferred, so complying with electromagnetic compatibility (EMC) requirements for the energy storage system is easier to achieve than with metal cooling plates or channels.

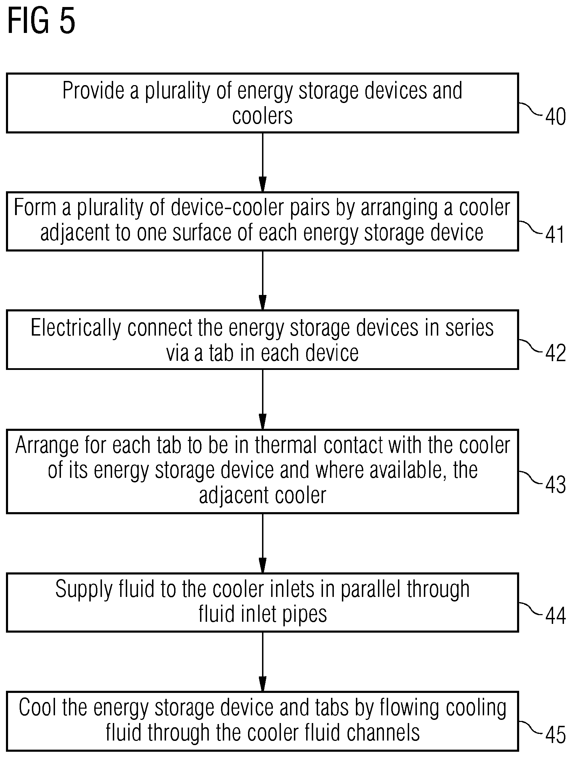

Fig.5 is a flow diagram illustrating typical assembly of an energy storage system according to the invention. Each of a plurality of energy storage devices 23 which make up an energy storage module, are provided 40 with coolers 22. The device cooler pairs so formed are lined up, so that one side of each device is in thermal contact with one side of its cooler. The coolers are in fluid communication with the fluid supply from the cooling system 5 in parallel and the energy storage devices 23 are electrically connected together in series. Other than at the ends of the row of device-cooler pairs within one module 10, the other side of the energy storage device is adjacent to the other surface of the cooler of the next pair in line. If a pressure wall is required, the cooling effect on the surface of the energy storage device from the next cooler 22 in line is reduced compared with the effect from its own cooler. However, the cell tabs of each energy storage device are arranged 43 to be in thermal contact with both adjacent coolers 22.

The design is preferable to providing an additional cooling loop inside the module directed on the tabs, as this would be mechanically difficult to design around sensors that may be placed on top of the cell. Even adding a grid of cooling pipes in a non-conductive material beneath the battery cell tab welding point would add cost and complexity compared with using, or adapting the battery cell cooler as described above.

Although the detailed examples have been given with respect to electrochemical cells, such as batteries, for example Li-ion, alkaline, or NiMh batteries, or others, the invention does not apply to other types of stored energy units, in particular non-cylindrical capacitors ultracapacitors, or supercapacitors, fuel cells, or other types of energy storage which have a surface that can be cooled by a cooler and which may also suffer if the temperature of modules of the stored energy units regularly goes outside a preferred operating range, reducing the overall lifetime and increasing.

## Claims

1. An energy storage system, the system comprising at least one energy storage module, each module comprising a plurality of energy storage devices; wherein the energy storage device is designed as a battery cell; each energy storage device comprising at least one electrically conducting cell tab electrically connected to electrodes of the energy storage device, one end of the at least one electrically conducting cell tab protruding from the energy storage device; wherein the energy storage module further comprises a cooler for each energy storage device, the cooler comprising one or more enclosed cooling channels in thermal contact with one surface of the energy storage device; wherein the cooling channels of the cooler comprise an electrically non-conducting material;
wherein the material of the cooling channels is thermally conducting and wherein the cooler further comprises a section of the cooling channels thermally coupled to the protruding end of the cell tab,
wherein the channel walls further form a raised section at an end of the cooler to connect the cell tab to.

2. A system according to claim 1, wherein the cooler comprises one or more cooling fluid channels between a fluid inlet and a fluid outlet forming a serpentine flow path, or multiple parallel flow paths.

3. A system according to claim 1 or claim 2, wherein the cooler comprises a material having a thermal conductivity of between 0.2 W/mK and 50 W/mK.

4. A system according to any preceding claim, wherein the material comprises one of polyamide or thermoplastic.

5. A system according to any preceding claim, wherein the energy storage device comprises two cell tabs.

6. A system according to any preceding claim, wherein the cell tabs comprise one of aluminium, or nickel-plated copper.

7. A system according to any preceding claim, wherein the cooling fluid comprises water.

8. A system according to claim 7, wherein the cooling fluid further comprises at least one of a corrosion inhibiting additive, an anti-freeze additive; and a biogrowth inhibiting additive.

9. A system according to any preceding claim, wherein the cells comprise Lithium-ion cells.

## Patentansprüche

1. Energiespeichersystem, wobei das System zumindest ein Energiespeichermodul umfasst, wobei jedes Modul eine Mehrzahl von Energiespeichervorrichtungen umfasst; wobei die Energiespeichervorrichtung als Batteriezelle ausgestaltet ist; wobei jede Energiespeichervorrichtung zumindest eine elektrisch leitende Zelllasche umfasst, die elektrisch mit Elektroden der Energiespeichervorrichtung verbunden ist, wobei ein Ende der zumindest einen elektrisch leitenden Zelllasche aus der Energiespeichervorrichtung vorsteht; wobei das Energiespeichermodul ferner eine Kühleinheit für jede Energiespeichervorrichtung umfasst, wobei die Kühleinheit einen oder mehrere umschlossene Kühlkanäle in Wärmekontakt mit einer Oberfläche der Energiespeichervorrichtung umfasst; wobei die Kühlkanäle der Kühleinheit ein elektrisch nicht leitendes Material umfassen;
wobei das Material der Kühlkanäle wärmeleitend ist und wobei die Kühleinheit ferner einen Abschnitt der Kühlkanäle umfasst, der mit dem vorstehenden Ende der Zelllasche wärmeverbunden ist,
wobei die Kanalwände ferner einen erhabenen Abschnitt an einem Ende der Kühleinheit zur Verbindung mit der Zelllasche bilden.

2. System nach Anspruch 1, wobei der Kühler ein oder mehrere Kältefluidkanäle zwischen einem Fluideinlass und einem Fluidauslass umfasst, die einen serpentinenförmigen Strömungsweg oder mehrere parallele Strömungswege bilden.

3. System nach Anspruch 1 oder 2, wobei die Kühleinheit ein Material mit einer Wärmeleitfähigkeit zwischen 0,2 W/mK und 50 W/mk umfasst.

4. System nach einem vorstehenden Anspruch, wobei das Material eines von Polyamid oder Thermoplast umfasst.

5. System nach einem vorstehenden Anspruch, wobei die Energiespeichervorrichtung zwei Zelllaschen umfasst.

6. System nach einem vorstehenden Anspruch, wobei die Zelllaschen eines von Aluminium oder vernickeltem Kupfer umfassen.

7. System nach einem vorstehenden Anspruch, wobei das Kältefluid Wasser umfasst.

8. System nach Anspruch 7, wobei das Kältefluid ferner zumindest eines von einem korrosionshemmenden Zusatzstoff, einem Kälteschutzzusatzstoff; und einem biobewuchshemmenden Zusatzstoff umfasst.

9. System nach einem vorstehenden Anspruch, wobei die Zellen Lithiumionenzellen umfassen.

## Revendications

1. Système de stockage d'énergie, le système comprenant au moins un module de stockage d'énergie, chaque module comprenant une pluralité de dispositifs de stockage d'énergie ; dans lequel le dispositif de stockage d'énergie est conçu comme une cellule de batterie ; chaque dispositif de stockage d'énergie comprenant au moins une languette de cellule électriquement conductrice connectée électriquement à des électrodes du dispositif de stockage d'énergie, une extrémité de l'au moins une languette de cellule électriquement conductrice faisant saillie du dispositif de stockage d'énergie ; dans lequel le module de stockage d'énergie comprend en outre un refroidisseur pour chaque dispositif de stockage d'énergie, le refroidisseur comprenant un ou plusieurs canaux de refroidissement fermés en contact thermique avec une surface du dispositif de stockage d'énergie ; dans lequel les canaux de refroidissement du refroidisseur comprennent un matériau électriquement non conducteur ;
dans lequel le matériau des canaux de refroidissement est thermoconducteur et dans lequel le refroidisseur comprend en outre une section des canaux de refroidissement couplée thermiquement à l'extrémité saillante de la languette de cellule,
dans lequel les parois de canal forment en outre une section surélevée à une extrémité du refroidisseur pour relier la languette de cellule.

2. Système selon la revendication 1, dans lequel le refroidisseur comprend un ou plusieurs canaux de fluide de refroidissement entre une entrée de fluide et une sortie de fluide formant un trajet d'écoulement en serpentin, ou plusieurs trajets d'écoulement parallèles.

3. Système selon la revendication 1 ou la revendication 2, dans lequel le refroidisseur comprend un matériau ayant une conductivité thermique comprise entre 0,2 W/ mK et 50 W/mK.

4. Système selon l'une quelconque des revendications précédentes, dans lequel le matériau comprend un polyamide ou un thermoplastique.

5. Système selon l'une quelconque des revendications précédentes, dans lequel le dispositif de stockage d'énergie comprend deux languettes de cellule.

6. Système selon l'une quelconque des revendications précédentes, dans lequel les languettes de cellule comprennent soit de l'aluminium, soit du cuivre nickelé.

7. Système selon l'une quelconque des revendications précédentes, dans lequel le fluide de refroidissement comprend l'eau.

8. Système selon la revendication 7, dans lequel le fluide de refroidissement comprend en outre au moins un additif inhibiteur de corrosion, un additif antigel ; et un additif inhibiteur de la biocroissance.

9. Système selon l'une quelconque des revendications précédentes, dans lequel les cellules comprennent des cellules lithium-ion.
